# EUROPÄISCHE PATENTSCHRIFT

(11) **EP 1 171 943 B1**
(45) Veröffentlichungstag und Bekanntmachung des Hinweises auf die Patenterteilung: **20.01.2010**
(21) Anmeldenummer: 01913601.9
(22) Anmeldetag: 08.02.2001
(51) Int. Cl.: H02K 7/08, F16C 25/08, F16C 25/04

(54) **FEDERELEMENT ZUM AUSGLEICH VON AXIALSPIEL EINER MOTORWELLE EINES ELEKTROMOTORS**
SPRING ELEMENT FOR COMPENSATING THE AXIAL PLAY OF A MOTOR SHAFT OF AN ELECTROMOTOR
ELEMENT DE SUSPENSION PERMETTANT DE COMPENSER LE JEU AXIAL DE L'ARBRE D'UN MOTEUR ELECTRIQUE

(30) Priorität: 09.02.2000 DE 10005568
(43) Veröffentlichungstag der Anmeldung: 16.01.2002
(73) Patentinhaber: ROBERT BOSCH GMBH, 70442 Stuttgart (DE)
(72) Erfinder: SCHILLER, Herbert, 77830 Buehlertal (DE); MARTIN, Herbert, 77830 Buehlertal (DE); BOHNERT, Michael, 77855 Achern (DE); BOLDT, Markus, 76855 Achern (DE); RETTMAR, Ulrich, 76593 Gernsbach (DE)
(86) Internationale Anmeldenummer: PCT/DE2001/000488
(87) Internationale Veröffentlichungsnummer: WO 2001/059913

(56) Entgegenhaltungen:
- EP-A- 0 303 147
- EP-A- 0 723 087
- GB-A- 788 268
- GB-A- 1 428 998
- US-A- 2 307 772

## Beschreibung

### Stand der Technik

Die Erfindung betrifft ein Federelement zum Ausgleich von Axialspiel einer Motorwelle eines Elektromotors nach der Gattung des Hauptanspruchs.

Motorwellen bekannter Elektromotoren sind mit Axialspiel in einem Motorgehäuse gelagert. Das Axialspiel der Motorwelle ist notwendig wegen oder auch Folge von Herstellungstoleranzen. Außerdem ist ein Axialspiel der Motorwelle wegen unterschiedlicher Temperaturdehnungen der Motorwelle und des Motorgehäuses notwendig. Folge des Axialspiels der Motorwelle sind Geräusche, die teilweise abhängig von der Lage des Elektromotors sind und teils zu deutlich hörbaren Schlaggeräuschen beim Wechsel der Drehrichtung des Elektromotors führen. Des weiteren können axiale Schwingungen des Ankers auftreten, die Geräusche und erhöhten Verschleiß verursachen.

Aus diesem Grunde ist versucht worden, das Axialspiel der Motorwelle mit Federelementen auszugleichen. So ist beispielsweise in der US-PS 2 307 772 vorgeschlagen worden, eine gewölbte Federscheibe als Federelement auf die Motorwelle aufzusetzen, die sich gegen ein Motorwellenlager und einen wellenfesten Anker abstützt und dadurch Axialspiel der Motorwelle ausgleicht. Zur Anbringung der Federscheibe ist allerdings eine Vielzahl an Teilen notwendig. So ist die Federscheibe fest mit zwei ebenen Stützscheiben verbunden und es sind Teile vorgesehen, die die Federscheibe drehfest und axial beweglich auf der Motorwelle halten. Das bekannte Federelement ist deswegen aufwendig und teuer in Herstellung und Montage.

Die europäische Patentanmeldung EP-A-0 303 147 offenbart eine gewellte Federscheibe, die einen gewellten Außenring und einen ebenen Innenring aufweist, die über radiale Verbindungsstege einstückig miteinander sind. Der gewellte Außenring bildet das eigentliche Federelement, das der Federscheibe ihre Federeigenschaften verleiht.

Die Patentanmeldung EP-A-723 087 offenbart eine Federscheibe mit in Axialansicht nach Art einer Verzahnung nach innen stehenden Federlaschen, die abwechselnd axial in die eine und die andere Richtung gekröpft sind.

### Vorteile der Erfindung

Das erfindungsgemäße Federelement mit den Merkmalen des Anspruchs 1 weist eine Anlaufscheibe auf, mit der es sich axial beispielsweise an einem Wellenlager der Motorwelle des Elektromotors abstützt. Mit der Anlaufscheibe sind ein oder mehrere Federarme einstückig verbunden, die die Motorwelle mit einer Federkraft in axialer Richtung beaufschlagen und dadurch das Axialspiel der Motorwelle eliminieren. Die Federarme sind einstückig mit einem Stützfuß, den sie in axialer Richtung federnd mit der Anlaufscheibe verbinden. Der Stützfuß ist auf eine Stützhülse aufgesetzt, mit der das Federelement auf eine Motorwelle eines Elektromotors aufgepresst werden kann.

Die Stützhülse weist einen Axialanschlag auf, der einen Federweg der Anlaufscheibe begrenzt. Der Axialanschlag kann eine Stirnfläche der Stützhülse sein. Das erfindungsgemäße Federelement hat den Vorteil, dass es einfach und preisgünstig insbesondere aus Kunststoff beispielsweise durch Spritzgießen herstellbar ist. Weiterer Vorteil ist die Montage des erfindungsgemäßen Federelements durch einfaches Aufsetzen eines einzigen Teils auf die Motorwelle. Mit dem erfindungsgemäßen Federelement wird die Motorwelle mit geringer Kraft axial vorgespannt und in einer bestimmten Position gehalten. Laufgeräusche durch Axialspiel der Motorwelle entfallen, Geräusche beim Wechseln der Drehrichtung werden stark reduziert oder entfallen ebenfalls. Zudem werden axiale Schwingungen der Motorwelle vermieden. Außerdem gleicht das erfindungsgemäße Federelement unterschiedliche thermische Dehnungen des Motorgehäuses und der Motorwelle aus.

Die Unteransprüche haben vorteilhafte Ausgestaltungen und Weiterbildungen der im Hauptanspruch angegebenen Erfindung zum Gegenstand.

### Zeichnung

Die Erfindung wird nachfolgend anhand eines in der Zeichnung dargestellten Ausführungsbeispiels näher erläutert. Es zeigen:
- Fig. 1: ein erfindungsgemäßes Federelement im Halbschnitt; und
- Fig. 2: eine vereinfachte Darstellung eines Elektromotors mit dem Federelement aus Fig. 1 gemäß der Erfindung im Achsschnitt. '

### Beschreibung des Ausführungsbeispiels

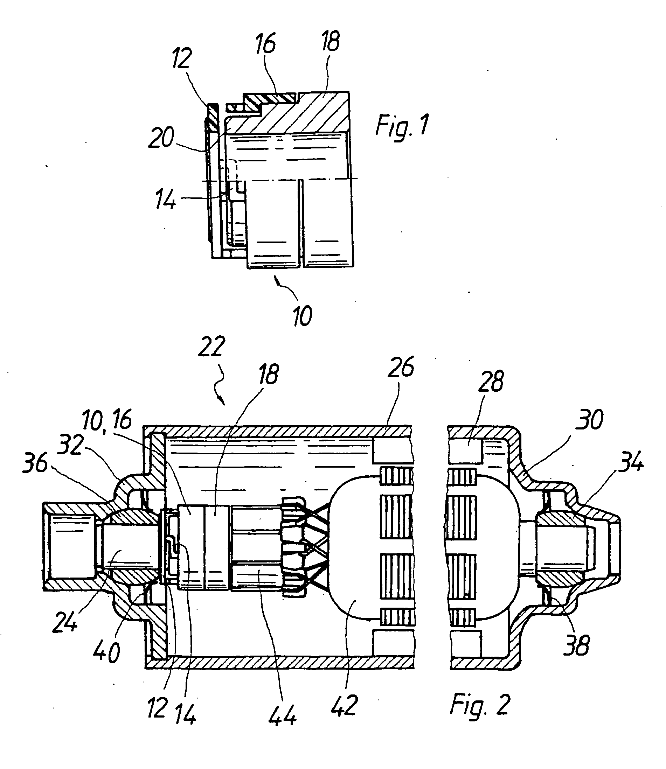

Das in Figur 1 dargestellte, erfindungsgemäße Federelement 10 weist eine ringförmige Anlaufscheibe 12 auf, die über Federarme 14, die über den Umfang verteilt angeordnet sind, mit einem hohlzylindrischen Stützfuß 16 verbunden ist. Die Anlaufscheibe 12, die Federarme 14 und der Stützfuß 16 sind einstückig durch Spritzgießen aus Kunststoff hergestellt. Die Federarme 14 verlaufen in ihrem Mittelabschnitt in Umfangsrichtung und sind an beiden Enden rechtwinklig in achsparalleler Richtung umgebogen und gehen an ihren beiden Enden einstückig in die Anlaufscheibe 12 bzw. in den Stützfuß 16 über. Aufgrund der Elastizität der Federarme 14 ist die Anlaufscheibe 12 in axialer Richtung federnd mit dem Stützfuß 16 verbunden. Eine Federkonstante der Federarme 14 ist niedrig, so dass eine axiale Federkraft des Federelements 10 gering ist.

Der hohlzylindrische Stützfuß 16 ist an seiner Innenseite gestuft. Mit dem Stützfuß 16 ist das Federelement 10 mit leichtem Presssitz auf eine Stützhülse 18 aufgesetzt, deren Außendurchmesser gestuft ist. Die Stützhülse 18 besteht im dargestellten Ausführungsbeispiels aus Messing, sie kann eben so aus einem andern metallischen oder nicht metallischen Werkstoff, beispielsweise auch aus Kunststoff hergestellt sein. Die Stützhülse 18 dient einer axialen Entformbarkeit des Federelements 10 aus einem nicht dargestellten Spritzgießwerkzeug nach dem Spritzgießen, die Stützhülse 18 reduziert einen Innendurchmesser des Stützfußes 16 des Federelements 10 auf einen Durchmesser einer Motorwelle eines Elektromotors. Ein Innendurchmesser der Stützhülse 18 ist kleiner als ein Innendurchmesser der Anlaufscheibe 12. In axialer Richtung ragt die Stützhülse 18 durch den Stützfuß 16 in Richtung der Anlaufscheibe 12 hindurch, sie bildet einen Axialanschlag 20 für die Anlaufscheibe 12, der einen axialen Federweg der Anlaufscheibe 12 in Richtung des Stützfußes 16 begrenzt. Auf diese Weise hat das Federelement 16 einen von den Federarmen 14 separaten Axialanschlag 20 für die Anlaufscheibe 12, der verhindert, dass die Federarme 14 plastisch verformt werden, brechen oder durch Materialermüdung beschädigt werden. Der Axialanschlag 20 ist separat von den Federarmen 14, der axiale Federweg der Anlaufscheibe 12 wird nicht durch Anlage der Federarme 14 an der Anlaufscheibe 12 und dem Stützfuß 16 begrenzt.

Figur 2 zeigt einen Elektromotor 22, dessen Motorwelle 24 erfindungsgemäß mit dem Federelement 10 aus Figur 1 versehen ist. Der Elektromotor 22 ist zur Verwendung als Sitzverstellmotor für einen elektrisch verstellbaren Sitz eines Kraftwagens vorgesehen. Der Elektromotor 22 weist ein topfförmiges Motorgehäuse 26 auf, an dessen Innenumfang Permanentmagnete 28 angebracht sind. Die Motorwelle 24 ist an einem Ende drehbar in einer Gehäusestirnwand 30, die einstückig mit dem Motorgehäuse 26 ist, und an ihrem anderen Ende in einem Gehäusedeckel 32, der in eine offene Stirnseite des Motorgehäuses 26 eingesetzt ist, gelagert. Zur drehbaren Lagerung sind Kalotten-Sinterlager 34, 36 auf die Enden der Motorwelle 24 aufgesetzt, die mit je einer Federscheibe 38, 40 in der Gehäusestirnwand 30 bzw. im Gehäusedeckel 32 gesichert sind. Drehfest auf der Motorwelle 24 sind ein Ankerblechpaket 42 mit Wicklung und ein Kommutator 44 angebracht. Am Kommutator 44 schleifend anliegende, an sich bekannte Kohlebürsten sind der einfacheren Darstellung wegen in der Zeichnung weggelassen.

Zwischen dem Kommutator 44 und einem der beiden Sinterlager 36 ist das erfindungsgemäße Federelement 10 mit seiner Stützhülse 18 auf die Motorwelle 24 aufgepresst. Die Anlaufscheibe 12 des Federelements 10, die einen größeren Innendurchmesser als die Stützhülse 18 aufweist, ist auf der Motorwelle 24 frei beweglich. Die Stützhülse 18 und der Stützfuß 16 des Federelements 10 sind dem Kommutator 44 zugewandt, die Anlaufscheibe 12 wird von den Federarmen 14 mit geringer Vorspannung axial gegen das Sinterlager 36 gedrückt. Aufgrund der niedrigen Federkonstante der Federarme 14 ist die Vorspann- oder Federkraft und somit eine Reibung zwischen der Anlaufscheibe 12 und dem Sinterlager 36 bei rotierender Motorwelle 24 gering. Durch die geringe Reibung sind Verschleiß und Leistungsverlust ebenfalls gering.

Das erfindungsgemäße Federelement 10, das die Motorwelle 24 des Elektromotors 22 in axialer Richtung mit Vorspannung wischen den beiden Sinterlagern 34, 36 hält, eliminiert axiales Lagerspiel, es verhindert Axialbewegungen der Motorwelle 24 und gleicht Herstellungstoleranzen und unterschiedliche thermische Dehnungen zwischen Motorgehäuse 26 und Motorwelle 24 aus. Der Axialanschlag 20 begrenzt eine gegen die Federkraft der Federarme 14 maximal mögliche Axialverschiebung der Motorwelle 24, so dass selbst bei einem Bruch der Federarme 14 oder einer Axialbelastung der Motorwelle 24, die größer als eine Federkraft der Federarme 14 ist, eine Axialverschieblichkeit der Motorwelle 24 auf einen zulässigen, die Funktionsfähigkeit des Elektromotors 22 nicht beeinträchtigenden Wert begrenzt bleibt.

## Patentansprüche

1. Federelement zum Ausgleich von Axialspiel einer Motorwelle eines Elektromotors, wobei das Federelement (10) einen oder mehrere Federarme (14), eine Anlaufscheibe (12), die mit den Federarmen (14) einstückig ist, und einen Stützfuß (16), der mit den Federarmen (14) einstückig ist, aufweist, **dadurch gekennzeichnet, dass** das Federelement (10) eine Stützhülse (18) aufweist, auf die der Stützfuß (16) aufgesetzt ist, und dass die Stützhülse (18) einen Axialanschlag (20) aufweist, der einen Federweg der Anlaufscheibe (12) begrenzt.

2. Federelement nach Anspruch 1, **dadurch gekennzeichnet, dass** die Federarme (14) in etwa in Umfangsrichtung verlaufen.

3. Federelement nach Anspruch 1, **dadurch gekennzeichnet, dass** das Federelement (10) aus Kunststoff besteht.

## Claims

1. Spring element for compensating axial play of a motor shaft of an electric motor, with the spring element (10) having one or more spring arms (14), a thrust washer (12) which is integral with the spring arms (14), and a supporting foot (16) which is integral with the spring arms (14), **characterized in that** the spring element (10) has a supporting sleeve (18) onto which the supporting foot (16) is mounted, and **in that** the supporting sleeve (18) has an axial stop (20) which delimits a spring travel of the thrust washer (12).

2. Spring element according to Claim 1, **characterized in that** the spring arms (14) run approximately in the circumferential direction.

3. Spring element according to Claim 1, **characterized in that** the spring element (10) is composed of plastic.

## Revendications

1. Elément de ressort pour compenser le jeu axial de l'arbre de moteur d'un moteur électrique, l'élément de ressort (10) présentant un ou plusieurs bras de ressort (14), un disque de butée (12) qui est réalisé d'une seule pièce avec les bras de ressort (14), et une base de support (16) qui est réalisée d'une seule pièce avec les bras de ressort (14), **caractérisé en ce que** l'élément de ressort (10) présente une douille de support (18) qui est posée sur la base de support (16) et **en ce que** la douille de support (18) présente une butée axiale (20) qui limite une course de ressort du disque de butée (12).

2. Elément de ressort selon la revendication 1, **caractérisé en ce que** les bras de ressort (14) s'étendent approximativement dans la direction périphérique.

3. Elément de ressort selon la revendication 1, **caractérisé en ce que** l'élément de ressort (10) se compose de plastique.
